# EUROPEAN PATENT SPECIFICATION

(11) **EP 3 237 352 B1**
(45) Date of publication and mention of the grant of the patent: **15.09.2021**
(21) Application number: 15735848.2
(22) Date of filing: 25.06.2015
(51) Int. Cl.: C04B 26/04, C04B 26/06, C04B 40/00, C04B 111/00

(54) **COMPOSITION FOR A PASTY FILLER MATERIAL, PASTY FILLER, AND METHOD FOR PRODUCING A PASTY FILLER MATERIAL**
ZUSAMMENSETZUNG FÜR EINE PASTÖSE FUGEN- UND AUSGLEICHSMASSE, PASTÖSE FUGEN- UND AUSGLEICHSMASSE UND VERFAHREN ZUR HERSTELLUNG EINER PASTÖSEN FUGEN- UND AUSGLEICHSMASSE
COMPOSITION POUR UN COMPOSÉ PÂTEUX POUR JOINTOIEMENT ET NIVELLEMENT, COMPOSÉ PÂTEUX POUR JOINTOIEMENT ET NIVELLEMENT ET PROCÉDÉ DE PRODUCTION D'UN COMPOSÉ PÂTEUX POUR JOINTOIEMENT ET NIVELLEMENT

(30) Priority: 22.12.2014 WO PCT/EP2014/003458
(43) Date of publication of application: 01.11.2017
(73) Proprietor: Knauf Gips KG, 97346 Iphofen (DE)
(72) Inventor: WINGS, Norbert, 55234 Wendelsheim (DE)
(74) Representative: Zech, Stefan Markus
(86) International application number: PCT/EP2015/001278
(87) International publication number: WO 2016/102031

(56) References cited:
- EP-A1- 2 367 772
- EP-A1- 2 881 409
- EP-A1- 2 883 851
- EP-A2- 2 216 306
- WO-A1-2012/174405
- WO-A2-2011/057979
- US-A1- 2004 168 399
- US-A1- 2012 171 772
- US-A1- 2014 100 309
- US-A1- 2014 121 303
- US-B1- 6 200 380
- US-B1- 6 545 066
- "COATINGS ADDITIVES", , 1 December 2014 (2014-12-01), XP055225396, Retrieved from the Internet: URL:www.munzing.com [retrieved on 2015-11-03]
- SPICKERMANN: "Grundrezeptur ProMix Plus", INTERNES DATENBLATT, 4 November 2013 (2013-11-04), page 1, XP055496195,
- SPICKERMANN: "Grundrezeptur Rigiplast (Mat. Nr. 10769)", INTERNES DATENBLATT, 27 November 2003 (2003-11-27), page 1, XP055496193,

## Description

The invention relates to a composition for a lightweight pasty filler material, a lightweight pasty filler, and a method for producing a lightweight pasty filler material according to the respective independent claims.

In prior art, basically two types of fillers are known for filling joints or for being applied to surfaces, such as walls, in order to smooth out unevenness and to additionally function as primer layer for another layer to be applied thereon. Namely, on the one hand, there are powder fillers, and on the other hand, there are pasty fillers, which have the advantage that they are ready to use whereas powder fillers have to be mixed with water before use. Pasty fillers compared to powder fillers have the further advantage that besides being able to be used without any addition of water or other materials, they can be stored over months without their processing characteristics being modified or deteriorated.

In US 6,200,380 B1, for example a method for producing a cementitious composition is described.

A polymer binder, for example, polyvinyl acetate, polyethylene vinyl acetate, polyacrylate, and/or polyvinyl alcohol are employed, either as aqueous dispersion or as re-dispersible powder. The binders have the function to bind the components of the filler material and to adhesively bond the filler to the substrate, like a wall or the like.

As filler particles, nodular and lamellar materials are used which usually are of mineral origin. The filler particles form the framework or skeleton of the coating and, thus, contribute to the layer thickness and sink characteristics depending on the amount of filler material added. A main filler material is natural calcium carbonate or calcium magnesium carbonate (dolomite).

As additives, thickening agents and biocides are usually used. Thickening agents may be cellulose based additives, as hydroxypropylmethyl celluloses and hydroxyethyl celluloses which have the effect that the viscosity of the filler is maintained constant, and which ensure a constant processability when stored over a time period of up to one year.

Biocides are added in order to prevent bacterial contamination, and finally, fungicides are added for preventing fungal infestation.

The majority of pasty filler materials is applied manually, for example, by means of a trowel. If needed, the person using the filler material adds water for facilitating and improving the processability.

With increasing mechanization with respect to processing of chemical building products, pasty filler materials which can be used in processing machines have been developed. Specifically, in this respect, spray filler materials have been developed which can be applied to a surface with a layer thickness of 3 mm at a maximum, and which act as a substrate for further subsequently applied layers, as wall paint or wall papers.

However, spray fillers on a mineral basis known from prior art have the following shortcomings: When applying the pasty material by spraying, usually the method of hydraulic atomization or "airless application method" is employed. However, a key requirement for the airless application is that a homogeneous pasty material requires a reduced shear stress once it's being moved through the spray nozzle during spraying. Therefore pasty spray fillers have to be accordingly prepared prior to being applied to a surface or joint by mechanical homogenization which effects a shear thinning. This additional procedure leads to a substantial increase of the total processing time.

Further, in pasty spray fillers known from prior art as well as plaster materials usually organic components are implemented in order to ensure their mechanical workability. The use of organic components, however, usually involves emissions and odor nuisance which restricts the use of such products with respect to indoors. Moreover, organic components are critical with respect to fire behavior.

Pasty spray fillers should have the function to level unevenness of a surface so as to provide a homogeneous surface for further coatings, for example, decorative coatings. Many pasty fillers which are extremely well suited for being used in mechanical spraying devices, are either not able to provide this compensating function such that additional processing steps are necessary, or entail the above mentioned disadvantages with respect to odor and emissions, or poor fire behavior.

As described in US 6,545,066 in particular lightweight pasty fillers contain spherical silicate products, like micro perlite, for reducing the specific weight of the final product and provide an increased surface area yield of the product. Lightweight pasty fillers tend for several days or weeks to (post-) thickening and to the generation of air bubbles after storage. The generation of air bubbles and the thickening causes problems during the machine application, in particular with the "airless application method".

Finally, in cases where lightweight pasty filler materials are used as substrate layers for subsequent decorative coatings, products having a very high brightness and a high drying capacity have to be employed.

Therefore, it is an object of the present invention, to provide a composition for a lightweight pasty filler material which can be easily machine-processed and provides good crack and shrinkage resistance. It is also an object of the present invention to provide a corresponding lightweight pasty filler material, and a method for producing such a lightweight pasty filler material. The filler material is lightweight providing handling and application advantages as well as output efficiency (more square meters per kg).

This object is solved by a composition for a lightweight pasty filler material comprising a binding agent, fillers, and additives, wherein the composition further comprises 0.1 to 0.4 % by weight of an additive consisting of a blend of liquid hydrocarbons, modified fatty components, especially modified fatty acid compounds, nonionic emulsifiers, and silicone oil. Preferred embodiments of the invention are defined in the respective dependent claims.

The inventive composition provides a lightweight pasty filler which can be used without any additional processing or preceding preparation steps, in particular in airless spraying applications. Such a pasty filler can be easy manually processed and provides good crack and shrinkage resistance. Additionally, since it uses an additive consisting of a blend of liquid hydrocarbons, modified fatty acid derivatives, nonionic emulsifiers, and silicone oil an excellent workability of the filler over a long time period is ensured. The aliphatic hydrocarbon components of this additive have an anti-foaming/venting effect. Thereby, air bubbles generated during storage of the filler material are removed.

Finally, the aliphatic hydrocarbons improve the flow characteristics of the sprayable filler material. This allows for implementing a continuous material transport, for example, an airless method without a mechanical homogenizing before the application. In general this allows achieving a high application thickness.

According to a preferred embodiment of the invention the liquid hydrocarbons are selected from the group consisting of saturated hydrocarbons with the general formula CₙH₂ₙ+₂, where n= 5 to 15 and cycloalkanes, composed of 5 and/or 6 member rings with the general formula CₙH₂ₙ, and mixtures thereof. The saturated hydrocarbons comprise straight or branched carbon chains or both.

Preferably, the modified fatty acid compounds are selected from the group consisting of fatty acid ester, fatty alcohols, alkoxylates, polyglycol-ethers, fatty acids, and mixtures thereof.

As the non-ionic emulgators compounds selected from the group consisting of fatty alcohols, cetyl alcohol, stearyl alcohol, cetostearyl alcohol, oleyl alcohol , and mixtures thereof can advantageously be used.

The silicon-oil is preferably selected from the group consisting of liquid polymerized siloxanes with alternating silicone-oxygen atoms and organic side chains. The side chains are attached to the tetravalent silicon centers comprising alkyl and phenyl groups and mixtures thereof.

According to the present invention, in a composition for a physically drying pasty filler material, the binders are polymer binders can be selected from the group consisting of polyethylene vinyl acetate, polyacrylate, and polyvinyl alcohol, or any combination thereof.

Preferably, the polymer binders are added to the composition as aqueous dispersion or as re-dispersible powder.

According to a further preferred embodiment of the invention, the fillers are selected from the group consisting of calcium carbonates, calcium magnesium carbonates, calcium sulfates, and lamellar siliceous materials, or any combination thereof.

Preferably, the composition comprises 40 to 70 % by weight of the fillers.

It is also advantageous, if the lamellar siliceous materials comprise kaolin of the illite group. Specifically preferred, kaolin and spherical calcium aluminum silicate are comprised in the composition in a ratio of 1 : 2. The lamellar siliceous materials preferably depict a platelet shape.

In another preferred embodiment of the present invention, the composition comprises 1 to 4 % by weight of palygorskite. This also offers the above described effect of a particularly even and homogeneous surface structure.

Preferably, the composition comprises perlite to reduce the weight for providing the lightweight pasty filler material. In one particular example, the composition comprises 2 to 40 % by weight of expanded perlite (e.g. micronized and/or expanded perlite).

Micronized expanded perlite are those having a mean particle size d98 of lower than 200 µm, preferably lower than 100 µm. The mean particle size is determined by making linear intercepts of the grain boundaries. Especially, the mean particle size d50 is between 20 to 80 µm, preferably between 40 to 50 µm.

According to yet a further preferred embodiment of the invention, the composition further comprises modified celluloses and biocides as additives.

The modified celluloses may be selected from the group consisting of hydroxypropylmethyl celluloses and hydroxyethyl celluloses. Moreover, it is preferred, if the composition comprises 0.1 to 0.7 % by weight of the hydroxypropylmethyl celluloses and/or hydroxyethyl celluloses.

The biocides may be added to the composition on a basis of 2-methyl-2H-isothiazoline-3-on (MIT) and 2-bromo-2-nitropopane-1.3-diol (BNPD).

It is also preferable, if the composition comprises 0.1 to 1 % by weight of biocides.

Further, according to another preferred embodiment, the composition comprises 0.01 to 0.03 % by weight of fungicides which are added to the composition on a basis of isopropynyl butylcarbamate (IPBC).

According to the present invention, also a lightweight pasty filler, in particular physically drying spray filler, which is made from the above specified composition is provided. The inventive filler provides the advantages already described above in connection with its composition.

According to the present invention, the specific weight of the pasty filler is below 1.2 kg/I. In particular preferred it is below 1 kg/I. This pasty filler is considered as a lightweight pasty filler.

According to a further preferred embodiment of the present invention, a layer thickness of 1 to 3 mm immediately after application will shrink to layer thicknesses of 75 % up to 85 % after drying.

The present invention also provides a method for producing a lightweight pasty filler as specified above. The method is based on a two-stage process, according to which in a first step, dry components are homogenized, and in a second step, the homogenized dry components are added to aqueous or water-dilutable components. By the inventive method, a pasty filler having the above described advantages can be provided.

Preferably, the first and second steps of the two-stage process may be carried out in parallel for more than 80% of the processing time. Thus, the parallel processing saves processing time, and thus renders the method more economical.

The resulting lightweight pasty filler generally can be applied by all methods known from the state of the art, e.g. by aid of mechanic tools or by machine processing. The machine processing is preferred.

Further details and features of the invention will become clear from the following description in connection with the drawing in which
- Fig. 1: shows a photograph of a surface with a coating of the pasty filler material according to an embodiment of the present invention, before and after a smooth finish with a trowel; and
- Fig. 2: shows still another photograph of a coating of the pasty filler material according to an embodiment of the present invention; and
- Fig. 3: shows an illustration of a card house structure of lamellar filler particles in an inventive embodiment of a pasty filler material.

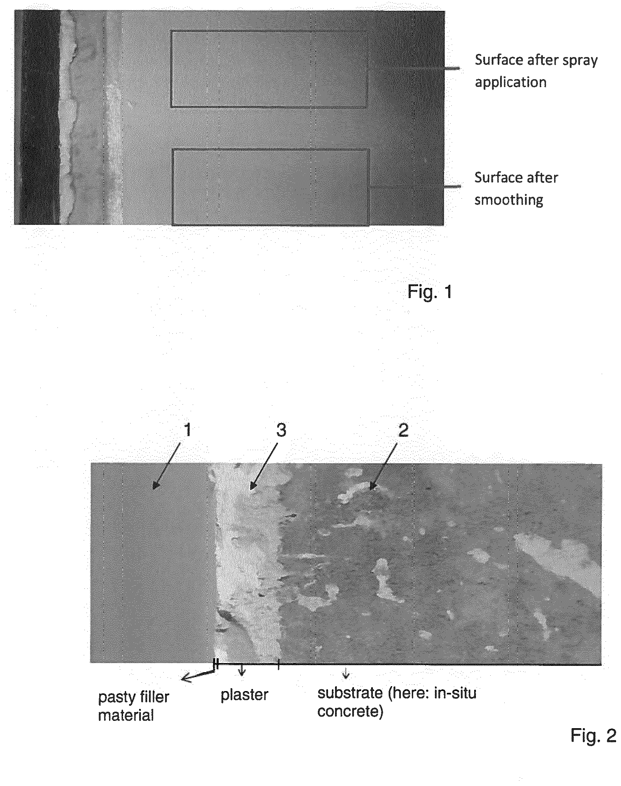

**Fig. 1** shows a photograph of a surface with a coating of the pasty filler material 1 according to an embodiment of the present invention, before and after a smooth finish with a trowel, wherein the indicated upper rectangular area displays a surface immediately after spray application of the filler, whereas the lower rectangular area displays a finished surface which has been additionally smoothed by means of a trowel. The application of the spray filler has been carried out means of a hydraulic atomization process, namely, an airless method. For this, either a piston pump or a spiral pump may be used. Usually, the use of a piston pump is preferred, because when using the latter, an even and uniform material application with high throughput can be achieved. In practice, the material is sprayed onto a surface with an even spraying cone. By this, a surface having a uniform texture is obtained which afterwards may be smoothed out by means of a wide trowel so as to obtain the finished coating.

**Fig. 2** shows still another photograph of a coating of the lightweight pasty filler material 1 according to an embodiment of the present invention which in contrast to the example shown in Fig. 4 has been applied onto a surface made from in-situ concrete 2 which at first has been coated with a plaster layer 3. Here, only one application for a new coating with the lightweight pasty filler material 1 may be sufficient, however, two coatings each of which having a layer thickness below 3 mm is preferable.

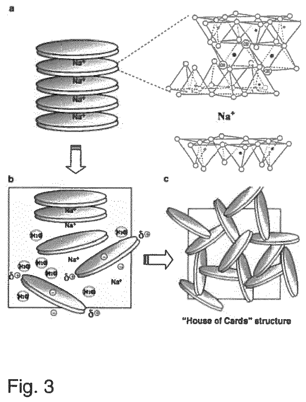

**Fig. 3** shows an illustration of a card house structure. Since kaolin has a plateshaped morphology, due to the charge distribution, a card house structure can be formed by the platelets to level out defect sites in the surface to be coated and to reach a high application layer thickness without the filler material slipping off the substrate.

An characterization of the lightweight pasty filler composition for a lightweight pasty filler material 1 according to an embodiment of the present invention compared to an example of a composition known from prior art is shown in the table provided below.

| Raw material | Chemical description of raw material | Example from prior art | Examples for lightweight pasty filler material compositions according to the present invention | | Possible range for filler compositions according to the present invention |
|---|---|---|---|---|---|
| | | % by weight | g | % by weight | % by weight |
| Dolomite powder 90 µm | Carbonate | 10 - 50 | 850.00 | 43,95 | 10-70 |
| Minugel FG | Palygorskite | 0.2 - 10 | 22,70 | 1,17 | 0.2 - 10 |
| Mica-Celia 125 | Muscovite mica | 2 - 6 | 75 | 3,88 | 2 - 6 |
| Sil-Cell 35.34 | Micronized expanded perlite | 2 - 40 | 81,50 | 4,21 | 2 - 40 |
| Cellosize QP 52000 | Hydroxyethylcellulose (HEC) | 0.1 - 0.8 | | | |
| Walocel MK 25000 PFV | Hydroxypropyl methylcellulose (HPMC) | | 6,30 | 0.33 | 0.1 -0.8 |
| Emset KH 6 | modified starch | | 6 | 0.31 | 0.1 - 1 |
| K-Flex DP | Oxydipropydibenzoat | 0.1 - 0.5 | | | |
| Agitan 218 | blend of liquid hydrocarbons, modified fatty acid derivatives, nonionic emulsifiers, and silicone oil | | 4 | 0.21 | 0.1 - 0.4 |
| Vinnamul 3171 N | Ethylen vinylacetate copolymer (EVA) | 0.5 - 5 | 75,00 | 3,88 | 0.5 - 5 |
| Biocide | 2-methyl-2H-isothiazolin-3-on (MIT) and 2-bromo-2-nitropropan-1,3-diol (BNPD) | 0.1 - 1 | 3 | 0.16 | 0.1 - 1 |
| Water | Water | 20 - 55 | 810.00 | 41,89 | 20 - 60 |
| Polyphase PW 40 | 3-lodo-2-propynyl butylcarbamate (IPBC) | 0.02 - 1 | 0.30 | 0.02 | 0.01 - 0.03 |
| Total batch kg | | | 1933,80 | 100.00 | |

A lightweight pasty sprayable filler material having a composition according to the present invention provides for a homogeneous substance which still has comparably low shear stress at high shear rates.

## Claims

1. Composition for a lightweight pasty filler material, comprising a binding agent, fillers, and additives, wherein the composition further comprises 0.1 to 0.4 % by weight of an additive consisting of a blend of liquid hydrocarbons, modified fatty acid compounds, nonionic emulsifiers, and silicone oil.

2. Composition according to claim 1, wherein the fillers are selected from the group consisting of calcium carbonates, calcium magnesium carbonates, calcium sulfates, and lamellar siliceous materials, or any combination thereof.

3. Composition according to claim 2, wherein the lamellar siliceous materials comprise kaolin of the illite group.

4. Composition according to any one of claims 1 to 3, wherein the composition comprises 1 to 4 % by weight of palygorskite.

5. Composition according to any one of claims 1 to 4, wherein the composition comprises perlite.

6. Composition according to claim 5, wherein the composition comprises 2 to 40 % by weight of perlite, especially micronized and expanded perlite with a mean particle size d98 of less than 200 µm.

7. Composition according to any one of claims 1 to 6, wherein the liquid hydrocarbons are selected from the group consisting of saturated hydrocarbons with the general formula CₙH₂ₙ+₂, where n= 5 to 15 with straight or branched carbon chains and cycloalkanes composed of 5 and 6 member rings with the general formula CₙH₂ₙ, and mixtures thereof.

8. Composition according to any one of the claims 1 to 7, wherein the modified fatty acid compounds are selected from the group consisting of fatty acid ester, fatty alcohols, alkoxylates, polyglycol-ethers, fatty acids, and mixtures thereof.

9. Composition according to any one of the claims 1 to 8, wherein the non-ionic emulgators are selected from the group consisting of fatty alcohols, cetyl alcohol, stearyl alcohol, cetostearyl alcohol, oleyl alcohol, and mixtures thereof.

10. Composition according to any one of the claims 1 to 9, wherein the silicon-oil is selected from the group consisting of liquid polymerized siloxane with alternating silicone-oxygen atoms and organic side chains, wherein the side chains are attached to the tetravalent silicon centers comprising alkyl and phenyl groups and mixtures thereof.

11. Composition according to any one of claims 1 to 10, wherein the composition further comprises modified celluloses, starches, biocides, or fungicides as additives.

12. Composition according to claim 11, wherein the starches are modified starches, especially starch ether modified with alkylene oxides with the general formula CₙH₂ₙ + 1O, where n = 2 to 5.

13. Lightweight pasty filler, in particular physically drying spray filler, which is made from the composition according to any one of claims 1 to 12, wherein the pasty filler has a specific weight below 1.2 kg/I.

14. Method for producing a pasty filler according to claim 13, wherein the method is based on a two-stage process, according to which in a first step dry components are homogenized, and in a second step, the homogenized dry components are added to aqueous or water-dilutable components.

15. Method according to claim 14, wherein the first and second steps of the two-stage process may be carried out in parallel for more than 80% of the processing time.

## Patentansprüche

1. Zusammensetzung für ein leichtgewichtiges, pastöses Füllstoffmaterial, ein Bindemittel, Füllstoffe und Additive umfassend, wobei die Zusammensetzung darüber hinaus 0,1 bis 0,4 Gew.-% eines Additivs umfasst, das aus einer Mischung aus flüssigen Kohlenwasserstoffen, modifizierten Fettsäureverbindungen, nichtionischen Emulgatoren und Silikonöl besteht.

2. Zusammensetzung nach Anspruch 1, wobei die Füllstoffe aus der Gruppe ausgewählt sind, die aus Calciumcarbonaten, Calcium-Magnesiumcarbonaten, Calciumsulfaten und lamellaren silikatischen Materialien oder irgendeiner Kombination davon besteht.

3. Zusammensetzung nach Anspruch 2, wobei die lamellaren silikatischen Materialien Kaolin der Illit-Gruppe umfassen.

4. Zusammensetzung nach einem der Ansprüche 1 bis 3, wobei die Zusammensetzung 1 bis 4 Gew.-% Palygorskit umfasst.

5. Zusammensetzung nach einem der Ansprüche 1 bis 4, wobei die Zusammensetzung Perlit umfasst.

6. Zusammensetzung nach Anspruch 5, wobei die Zusammensetzung 2 bis 40 Gew.-% Perlit, speziell mikronisierten und expandierten Perlit mit einer mittleren Partikelgröße d98 von weniger als 200 µm umfasst.

7. Zusammensetzung nach einem der Ansprüche 1 bis 6, wobei die flüssigen Kohlenwasserstoffe aus der Gruppe ausgewählt sind, die aus gesättigten Kohlenwasserstoffen mit der allgemeinen Formel CₙH₂ₙ₊₂, worin n = 5 bis 15 ist, mit geraden oder verzweigten Kohlenstoffketten und Cycloalkanen, die sich aus 5- und 6-gliedrigen Ringen mit der allgemeinen Formel CₙH₂ₙ zusammensetzen, und Gemischen davon besteht.

8. Zusammensetzung nach einem der Ansprüche 1 bis 7, wobei die modifizierten Fettsäureverbindungen aus der Gruppe ausgewählt sind, die aus Fettsäureester, Fettalkoholen, Alkoxylaten, Polyglycolethern, Fettsäuren und Gemischen davon besteht.

9. Zusammensetzung nach einem der Ansprüche 1 bis 8, wobei die nichtionischen Emulgatoren aus der Gruppe ausgewählt sind, die aus Fettalkoholen, Cetylalkohol, Stearylalkohol, Cetostearylalkhohol, Oleylalkohol und Gemischen davon besteht.

10. Zusammensetzung nach einem der Ansprüche 1 bis 9, wobei das Silikonöl aus der Gruppe ausgewählt ist, die aus flüssigem polymerisierten Siloxan mit abwechselnden Silikon-Sauerstoff-Atomen und organischen Seitenketten, wobei die Seitenketten an den vierwertigen Silikonkernen hängen, die Alkyl- und Phenylgruppen umfassen, und Gemischen davon besteht.

11. Zusammensetzung nach einem der Ansprüche 1 bis 10, wobei die Zusammensetzung darüber hinaus modifizierte Zellulosen, Stärken, Biozide oder Fungizide als Additive umfasst.

12. Zusammensetzung nach Anspruch 11, wobei die Stärken modifizierten Stärken sind, speziell Stärkeether, der mit Alkylenoxiden mit der allgemeinen Formel CₙH₂ₙ₊₂ + 1 O modifiziert ist, worin n = 2 bis 5 ist.

13. Leichtgewichtiger pastöser Füllstoff, insbesondere physikalisch trocknender Sprühfüllstoff, der aus der Zusammensetzung nach einem der Ansprüche 1 bis 12 hergestellt ist, wobei der pastöse Füllstoff ein spezifisches Gewicht unter 1,2 kg/l hat.

14. Verfahren zum Produzieren eines pastösen Füllstoffs nach Anspruch 13, wobei das Verfahren auf einem zweistufigen Prozess beruht, demgemäß in einem ersten Schritt Trockenbestandteile homogenisiert werden, und in einem zweiten Schritt die homogenisierten Trockenbestandteile wässrigen oder wasserverdünnbaren Bestandteilen zugesetzt werden.

15. Verfahren nach Anspruch 14, wobei sich der erste und zweite Schritt des zweistufigen Prozesses parallel über mehr als 80 % der Bearbeitungszeit ausführen lassen.

## Revendications

1. Composition pour un matériau de charge pâteuse légère, comprenant un liant, des charges, et des additifs, sachant que la composition comprend en outre 0,1 à 0,4 % en poids d'un additif composé d'un mélange d'hydrocarbones liquides, de composés d'acide gras modifiés, d'émulsifiants non ioniques, et d'huile de silicone.

2. Composition selon la revendication 1, sachant que les charges sont sélectionnées dans le groupe constitué par les carbonates de calcium, les carbonates de calcium-magnésium, les sulfates de calcium, et les matériaux siliceux lamellaires, ou toute combinaison de ceux-ci.

3. Composition selon la revendication 2, sachant que les matériaux siliceux lamellaires comprennent du kaolin du groupe des illites.

4. Composition selon l'une quelconque des revendications 1 à 3, sachant que la composition comprend 1 à 4 % en poids de palygorskite.

5. Composition selon l'une quelconque des revendications 1 à 4, sachant que la composition comprend de la perlite.

6. Composition selon la revendication 5, sachant que la composition comprend 2 à 40 % en poids de perlite, spécialement de perlite micronisée et expansée avec une taille de particule moyenne d98 de moins de 200 µm.

7. Composition selon l'une quelconque des revendications 1 à 6, sachant que les hydrocarbones liquides sont sélectionnés dans le groupe constitué par les hydrocarbones saturés présentant la formule générale CₙH₂ₙ+₂, où n = 5 à 15 avec des chaînes de carbone droites ou ramifiées et les cycloalcanes composés de cycles de 5 et 6 éléments présentant la formule générale CₙH₂ₙ et les mélanges de ceux-ci.

8. Composition selon l'une quelconque des revendications 1 à 7, sachant que les composés d'acide gras modifiés sont sélectionnés dans le groupe constitué par l'ester d'acide gras, les alcools gras, les alcoxylates, les éthers de polyglycol, les acides gras, et les mélanges de ceux-ci.

9. Composition selon l'une quelconque des revendications 1 à 8, sachant que les émulsifiants non ioniques sont sélectionnés dans le groupe constitué par les alcools gras, l'alcool de cétyle, l'alcool de stéaryle, l'alcool de cétostéaryle, l'alcool d'oléyle, et les mélanges de ceux-ci.

10. Composition selon l'une quelconque des revendications 1 à 9, sachant que l'huile de silicone est sélectionnée dans le groupe constitué par le siloxane polymérisé liquide comportant des atomes de silicone et d'oxygène en alternance et des chaînes latérales organiques, sachant que les chaînes latérales sont attachées aux centres de silicone tétravalents comprenant des groupes d'alkyle et de phényle et les mélanges de ceux-ci.

11. Composition selon l'une quelconque des revendications 1 à 10, sachant que la composition comprend en outre des celluloses modifiées, des amidons, des biocides, ou des fongicides comme additifs.

12. Composition selon la revendication 11, sachant que les amidons sont des amidons modifiés, en particulier de l'éther d'amidon modifié avec des oxydes d'alkylène présentant la formule générale CₙH₂ₙ + 1 O, où n = 2 à 5.

13. Charge pâteuse légère, en particulier charge de pulvérisation à séchage physique, laquelle est composée de la composition selon l'une quelconque des revendications 1 à 12, sachant que la charge pâteuse a un poids spécifique inférieur à 1,2 kg/l.

14. Procédé de production d'une charge pâteuse selon la revendication 13, sachant que le procédé est basé sur un processus en deux étapes, selon lequel des composants secs sont homogénéisés à une première étape et les composants secs homogénéisés sont ajoutés à des composants aqueux ou solubles dans l'eau à une deuxième étape.

15. Procédé selon la revendication 14, sachant que la première et la deuxième étape du processus en deux étapes peuvent être effectuées en parallèle pendant plus de 80 % du temps de traitement.
